# EUROPEAN PATENT APPLICATION

(11) **EP 4 650 926 A1**
(43) Date of publication of application: **19.11.2025**
(21) Application number: 24829957.0
(22) Date of filing: 13.03.2024
(51) Int. Cl.: G06F 3/04817

(54) **INTERFACE PROCESSING METHOD AND ELECTRONIC DEVICE**

(30) Priority: 30.06.2023 CN 202310801583
(71) Applicant: Honor Device Co., Ltd., Shenzhen, Guangdong 518040 (CN)
(72) Inventor: MU, Weihu, Shenzhen, Guangdong 518040 (CN)
(74) Representative: Gill Jennings & Every LLP
(86) International application number: PCT/CN2024/081419
(87) International publication number: WO 2025/001304

(57) **Abstract**

An interface processing method and an electronic device are provided. A first application is installed in the electronic device. The method includes: receiving a first operation of a user on the first application; performing a first animation setting in response to a start event of the first operation; and performing animation processing in response to a third vertical synchronization signal, and displaying an animation picture of the first application when the first animation setting is completed and an end event of the first operation is received, where the third vertical synchronization signal is located between a first vertical synchronization signal and a second vertical synchronization signal in a first vertical synchronization signal period. In an embodiment of this application, a response speed of animation processing and display is increased, and user interaction experience is improved.

## Description

This application claims priority to Chinese Patent Application No. 202310801583.7, filed with the China National Intellectual Property Administration on June 30, 2023 and entitled "INTERFACE PROCESSING METHOD AND ELECTRONIC DEVICE", which is incorporated herein by reference in its entirety.

### TECHNICAL FIELD

This application relates to the field of terminal device technologies, and in particular, to an interface processing method and an electronic device.

### BACKGROUND

In a process in which a user interacts with an electronic device, the electronic device may display an animation picture. For example, the user taps to start an application, and the electronic device displays a startup animation of the application. The user taps to exit an application, and the electronic device displays an exit animation of the application. In a process of displaying an animation picture, the electronic device needs to determine, based on an operation behavior of the user, whether to perform drawing. A response speed of a process of drawing and displaying an animation picture is low, and a delay of the process is long, leading to poor user interaction experience.

### SUMMARY

Embodiments of this application provide an interface processing method and an electronic device, so as to increase a response speed of animation processing and display, and improve user interaction experience.

According to a first aspect, an embodiment of this application provides an interface processing method. The method is applied to an electronic device, and a first application is installed in the electronic device. The method includes: receiving a first operation of a user on the first application; performing a first animation setting in response to a start event of the first operation; and performing animation processing in response to a third vertical synchronization signal, and displaying an animation picture of the first application when the first animation setting is completed and an end event of the first operation is received, where the third vertical synchronization signal is located between a first vertical synchronization signal and a second vertical synchronization signal in a first vertical synchronization signal period.

The third vertical synchronization signal is in the first vertical synchronization signal period, and may be a vertical synchronization signal in a current system period in this application. In the first vertical synchronization signal period, a previous vertical synchronization signal is the first vertical synchronization signal, and a next vertical synchronization signal is the second vertical synchronization signal, which is a vertical synchronization signal in a next system period. Animation processing means animation rendering and compositing. The foregoing third vertical synchronization signal may refer to the first vertical synchronization signal described in a specific implementation of this application.

In an implementation of this application, before compositing of the vertical synchronization signal in the next system period, the electronic device may trigger animation processing by using the third vertical synchronization signal, so that a time of the animation processing can be advanced, thereby advancing a response to animation processing, increasing a speed of animation processing and display, accelerating a response to animation interaction, and improving user interaction experience. In addition, when detecting that an operation of the user starts, the electronic device may start an animation setting, and does not need to wait until the end of the first operation of the user for performing the animation setting. The foregoing process means that an occasion for processing the animation setting is advanced, so as to accelerate the process of animation processing and display, thereby ensuring that an animation response is more timely and user interaction is smoother.

In a possible implementation, the performing animation processing in response to a third vertical synchronization signal includes: performing animation processing in response to the third vertical synchronization signal when a first time difference between the third vertical synchronization signal and the second vertical synchronization signal is greater than or equal to first threshold duration, where the second vertical synchronization signal is a next vertical synchronization signal in the first vertical synchronization signal period. In this way, the electronic device may determine whether a time difference between the third vertical synchronization signal and the vertical synchronization signal in the next system period is greater than animation processing duration (the first threshold duration). When the time difference is greater than the animation processing duration, a process of processing may be performed in advance, and the electronic device performs processing in advance, so that animation processing can be effectively advanced. When the time difference is less than the animation processing duration, because a vertical synchronization signal in the system period is about to arrive, and there is no need to perform processing in advance, a vertical synchronization signal in a next system period may be awaited to trigger the process of animation processing, so as to ensure a necessity of performing animation processing based on the first vertical synchronization signal.

In a possible implementation, the performing animation processing in response to a third vertical synchronization signal includes: performing animation processing in response to the third vertical synchronization signal when a second time difference between the third vertical synchronization signal and the first vertical synchronization signal is less than or equal to second threshold duration, where the first vertical synchronization signal is a previous vertical synchronization signal in the first vertical synchronization signal period. In this way, the electronic device may determine whether a time difference between the third vertical synchronization signal and the vertical synchronization signal in the previous system period is less than animation processing duration (the second threshold duration). When the time difference is less than the animation processing duration, a process of processing may be performed in advance, and the electronic device performs processing in advance, so that animation processing can be effectively advanced. When the time difference is greater than the animation processing duration, because a vertical synchronization signal in the system period is about to arrive, and there is no need to perform processing in advance, a vertical synchronization signal in a next system period may be awaited to trigger the process of animation processing, so as to ensure a necessity of performing animation processing based on the third vertical synchronization signal.

In a possible implementation, the performing a first animation setting includes: setting an animation attribute of the first application for the first operation, where the animation attribute includes at least one of an animation type, animation content, an animation size, animation duration, or an animation start position and an animation end position; the animation type may include one of starting an application, sliding an intermediate interface, and exiting an application; the animation start position is used to indicate a position of a first frame of picture in M frames of animation pictures on a display, and the animation end position is used to indicate a position of a last frame of picture in the M frames of animation pictures on the display. In this way, the electronic device may set a current animation attribute parameter, and the animation attribute parameter may be used for the process of animation drawing, processing, and display. Different user operations may have different animation types. Specific information such as animation content, an animation size, animation duration, or an animation start position and an animation end position is associated with each of the first application and the animation type, thereby ensuring reliability of animation display.

In a possible implementation, the start event is an event from detecting no operation change to detecting the first operation; and the end event is an event from detecting a change of the first operation to detecting no change. The start event indicates a start of the first operation, and the end event indicates an end of the first operation. Start and end nodes affect a process of animation setting and animation processing, thereby accelerating a response process of animation processing and display.

In a possible implementation, the performing animation processing in response to a third vertical synchronization signal when the first animation setting is completed and an end event of the first operation is received includes: generating the third vertical synchronization signal and performing animation processing in response to the third vertical synchronization signal when the first animation setting is completed and the end event of the first operation is received. In this way, the electronic device may generate a third vertical synchronization signal, where the third vertical synchronization signal is not a periodic vertical synchronization signal, so that a process of animation processing and display can be triggered in advance, thereby accelerating animation display and improving user interaction experience.

In a possible implementation, the generating the third vertical synchronization signal includes: generating the third vertical synchronization signal when a first time difference between a current time and the second vertical synchronization signal is greater than or equal to first threshold duration, or a second time difference between the current time and the first vertical synchronization signal is less than or equal to second threshold duration, where the second vertical synchronization signal is a next vertical synchronization signal in the first vertical synchronization signal period; and the first vertical synchronization signal is a previous vertical synchronization signal in the first vertical synchronization signal period. In this way, whether the process of dynamic processing and display is performed in advance may be first determined, and when it is determined that the process of dynamic processing and display is performed in advance, a sixth vertical synchronization signal is generated. However, when the process of dynamic processing and display is not performed in advance, the sixth vertical synchronization signal does not need to be generated, thereby simplifying execution steps and logic, reducing unnecessary processing steps, improving execution efficiency of interface processing, and saving processing resources.

For details about the foregoing implementation, refer to descriptions of S911~S916. Details are not described.

In a possible implementation, after the generating the third vertical synchronization signal, the method further includes: determining whether the third vertical synchronization signal meets an advance trigger condition; and the performing animation processing in response to a third vertical synchronization signal includes: when the advance trigger condition is met, performing animation processing in response to the third vertical synchronization signal, where the advance trigger condition includes that a first time difference between the third vertical synchronization signal and the second vertical synchronization signal is greater than or equal to first threshold duration, or a second time difference between the third vertical synchronization signal and the first vertical synchronization signal is less than or equal to second threshold duration. In this way, the electronic device can determine whether to perform animation processing and display in advance by using the third vertical synchronization signal, so as to ensure a necessity of advance processing.

In a possible implementation, the electronic device includes a view system, a choreographer, and a display; and the performing animation processing in response to a third vertical synchronization signal includes: sending the third vertical synchronization signal to the choreographer by using the view system; performing image processing in response to the third vertical synchronization signal by using the choreographer, and obtaining N frames of animation images, where N is an integer greater than 1; and sequentially displaying the N frames of animation images by using the display. In this way, when receiving the third vertical synchronization signal, the choreographer can trigger a process of processing a third animation picture, and then the display displays the foregoing process. The third vertical synchronization signal is not a signal periodically sent by the system to the choreographer, but is actively generated by the application when a trigger condition is met, so as to ensure a timeliness of the third vertical synchronization signal, thereby increasing a response speed of animation processing and display.

In a possible implementation, the electronic device further includes an input framework module; the generating the third vertical synchronization signal when the first animation setting is completed and the end event of the first operation is received includes: sending an animation processing message to the input framework module by using the first application when the first animation setting is completed and the end event of the first operation is received; and generating the third vertical synchronization signal by using the input framework module; and before the sending the third vertical synchronization signal to the choreographer by using the view system, the performing animation processing in response to the third vertical synchronization signal further includes: sending the third vertical synchronization signal to the view system by using the input framework module when a first time difference between the third vertical synchronization signal and the second vertical synchronization signal is greater than or equal to first threshold duration, or a second time difference between the third vertical synchronization signal and the first vertical synchronization signal is less than or equal to second threshold duration. In this way, the view system can control whether to send an animation processing instruction to the choreographer, so as to control whether to trigger animation processing in advance, and ensure a necessity of advance triggering.

In a possible implementation, the electronic device further includes a view system; and the sending the first vertical synchronization signal to the choreographer by using the application includes: sending an animation processing message to the view system by using the application, where the animation processing message includes the first vertical synchronization signal; determining, by using the view system, whether a third time difference between the third operation and the first operation is greater than or equal to second threshold duration, where the third operation is an operation after the first operation; and when the third time difference is greater than or equal to the second threshold duration, sending an animation processing instruction to the choreographer by using the view system, where the animation processing instruction includes the first vertical synchronization signal. In this way, the electronic device may determine whether the time between the two adjacent operations is excessively short. If the time is excessively short, an animation may not be drawn or displayed. If the time is excessively long, an animation needs to be drawn or displayed, so as to ensure continuity and timeliness of animation display.

In a possible implementation, the electronic device stores a task list, the task list includes a first task and a second task, a priority of the first task is X, a priority of the second task is Y, and Y is greater than the priority of X; the method further includes: increasing the priority of the first task to Z, where Z is greater than the priority of Y; and the performing animation processing in response to a third vertical synchronization signal includes: in response to the third vertical synchronization signal, first performing image processing on the first task corresponding to the priority of Z, and then processing the second task corresponding to the priority of Y. In this way, a priority of an animation processing task in the task list is advanced, so that the choreographer can process the foregoing task in advance, thereby accelerating animation processing and display, increasing a response speed, and optimizing user interaction experience.

The first task is a task of an animation processing type, and the second task is not a task of the animation processing type.

According to a second aspect, an embodiment of this application provides an interface processing method, where the method is applied to an electronic device, a second application is installed in the electronic device, and the method includes: receiving a second operation of a user on the second application; performing a second animation setting in response to a start event of the second operation; and when the second animation setting is completed and an end event of the second operation is received, if a sixth vertical synchronization signal meets an advance trigger condition, performing animation processing in response to the sixth vertical synchronization signal, and displaying an animation picture of the second application, where the advance trigger condition includes that a first time difference between the sixth vertical synchronization signal and a fifth vertical synchronization signal is greater than or equal to first threshold duration, or a second time difference between the sixth vertical synchronization signal and a fourth vertical synchronization signal is less than or equal to second threshold duration; the sixth vertical synchronization signal is located between a fourth vertical synchronization signal and a fifth vertical synchronization signal in a second vertical synchronization signal period; the fourth vertical synchronization signal is a previous vertical synchronization signal in the second vertical synchronization signal period, and the fifth vertical synchronization signal is a next vertical synchronization signal in the second vertical synchronization signal period.

In an implementation of this application, before compositing of the vertical synchronization signal in the next system period, the electronic device may trigger animation processing by using the third vertical synchronization signal, so that a time of the animation processing can be advanced, thereby advancing a response to animation processing, increasing a speed of animation processing and display, accelerating a response to animation interaction, and improving user interaction experience. In addition, when detecting that an operation of the user starts, the electronic device may start an animation setting, and does not need to wait until the end of the first operation of the user for performing the animation setting. The foregoing process means that an occasion for processing the animation setting is advanced, so as to accelerate the process of animation processing and display, thereby ensuring that an animation response is more timely and user interaction is smoother. Further, when the advance trigger condition is met, animation processing is triggered in advance to ensure a necessity of advancing the animation processing. When a current time is close to a time of a vertical synchronization signal in a next period, animation processing does not need to be triggered in advance. When the current time is far from the time of the vertical synchronization signal in the next period, advance triggering results in a larger gain, so as to ensure that advance triggering achieves a more obvious pre-response effect.

The second vertical synchronization signal period is a vertical synchronization signal period in which the sixth vertical synchronization signal is located. The sixth vertical synchronization signal is not a periodic vertical synchronization signal. For details, refer to the first vertical synchronization signal described in a specific implementation.

In a possible implementation, when the second animation setting is completed and the end event of the second operation is received, the method further includes: if the sixth vertical synchronization signal does not meet the advance trigger condition, performing animation processing in response to the fifth vertical synchronization signal, and displaying the animation picture of the second application.

According to a third aspect, an embodiment of this application provides an electronic device. The electronic device includes one or more processors and one or more memories. The one or more processors are coupled to the one or more memories. The one or more memories are configured to store computer program code. The computer program code includes computer instructions. When the one or more processors execute the computer instructions, the electronic device is enabled to perform the interface processing method according to any one of the first aspect or the possible implementations of the first aspect.

According to a fourth aspect, an embodiment of this application provides an electronic device. The electronic device includes one or more processors and one or more memories. The one or more processors are coupled to the one or more memories. The one or more memories are configured to store computer program code. The computer program code includes computer instructions. When the one or more processors execute the computer instructions, the electronic device is enabled to perform the interface processing method according to any one of the second aspect or the possible implementations of the second aspect.

According to a fifth aspect, an embodiment of this application provides a computer program product including instructions. When the computer program product runs on an electronic device, the electronic device is enabled to perform the interface processing method according to any one of the first aspect or the possible implementations of the first aspect.

According to a sixth aspect, an embodiment of this application provides a computer program product including instructions. When the computer program product runs on an electronic device, the electronic device is enabled to perform the interface processing method according to any one of the second aspect or the possible implementations of the second aspect.

According to a seventh aspect, an embodiment of this application provides a computer-readable storage medium including instructions. When the instructions are run on an electronic device, the electronic device is enabled to perform the interface processing method according to any one of the first aspect or the possible implementations of the first aspect.

According to an eighth aspect, an embodiment of this application provides a computer-readable storage medium including instructions. When the instructions are run on an electronic device, the electronic device is enabled to perform the interface processing method according to any one of the second aspect or the possible implementations of the second aspect.

### BRIEF DESCRIPTION OF DRAWINGS

FIG. 1A is a schematic diagram of a hardware structure of an electronic device according to an embodiment of this application;
FIG. 1B is a schematic diagram of a software structure of an electronic device according to an embodiment of this application;
FIG. 2A~FIG. 2E are schematic diagrams of a group of user interfaces according to an embodiment of this application;
FIG. 3 is a schematic diagram of a first operation process of a user according to an embodiment of this application;
FIG. 4A and FIG. 4B are sequence diagrams of a group of interface processing methods according to an embodiment of this application;
FIG. 5A and FIG. 5B are sequence diagrams of another group of interface processing methods according to an embodiment of this application;
FIG. 6 is a schematic flowchart of an interface processing method according to an embodiment of this application;
FIG. 7 is a schematic flowchart of a method for determining whether to trigger animation processing and display based on a first vertical synchronization signal according to an embodiment of this application;
FIG. 8 is a sequence diagram of an interface processing method according to an embodiment of this application;
FIG. 9 is a schematic flowchart of another interface processing method according to an embodiment of this application; and
FIG. 10 is a schematic diagram of a task list adjustment and change according to an embodiment of this application.

### DESCRIPTION OF EMBODIMENTS

Terms used in the following embodiments of this application are merely intended to describe specific embodiments, but not intended to limit this application. As used in this specification and the claims of this application, singular expressions "one", "a", "the", "foregoing", and "this" are intended to include plural expressions, unless otherwise clearly specified in the context. It should be further understood that the term "and/or" used in this application indicates and includes any or all possible combinations of one or more listed items.

Embodiments of this application disclose an interface processing method and an electronic device, so as to increase a response speed of interface processing and display, and improve user interaction experience.

The electronic device responds to an operation of a user, and a user interface may display an animation. A fluent and smooth animation can significantly improve user interaction experience and quality. For example, the user taps to open a specific application, and the user interface may display rotation and enlargement of an application icon. The user exits the application, and the user interface may display a process of shrinking the application icon to a home screen, and so on. An animation display type is not limited in this application.

The electronic device in the embodiments of this application may be a device with a touchscreen, such as a mobile phone, a tablet computer, a desktop computer, a notebook computer, a handheld computer, a smart band, an ultra-mobile personal computer, a netbook, a personal phone, a personal data assistant, an augmented reality (AR)/virtual reality (VR), or the like. A specific form of the electronic device is not limited in this application.

**The following describes an apparatus in embodiments of this application.**

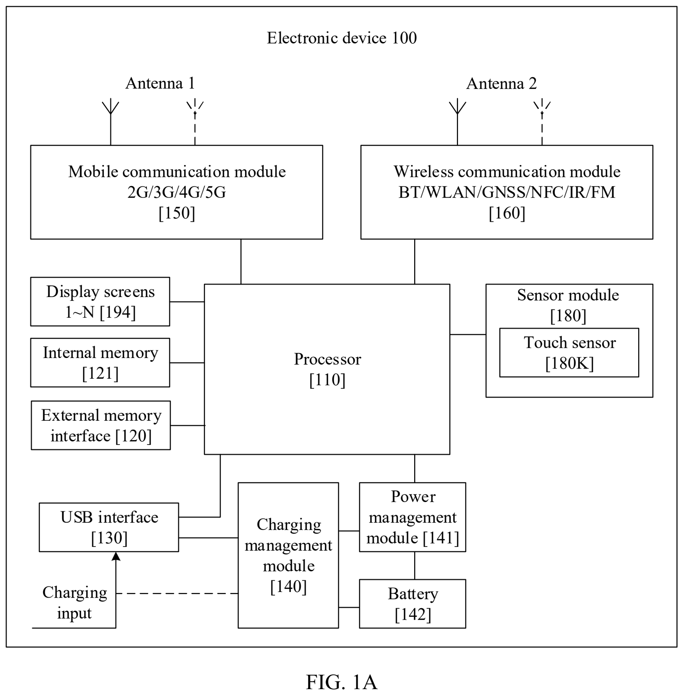

FIG. 1A is a schematic diagram of a hardware structure of an electronic device according to an embodiment of this application.

An electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, a sensor module 180, a display screen 194, and the like. The sensor module 180 may include a touch sensor 180K and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

It may be understood that, an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display screen 194, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs, which execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N display screens 194, where N is a positive integer greater than 1.

The touch sensor 180K is also referred to as a "touch panel". The touch sensor 180K may be disposed in the display screen 194. The touch sensor 180K and the display screen 194 constitute a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194.

In the embodiments of this application, the electronic device 100 may detect a user operation by using the touch sensor 180K. The user operation may include a hands-on operation (a start event) of the user from not touching the screen to touching the screen, and a raise hand operation (an end event) of the user from touching the screen to leaving the screen. The display screen 194 may display an animation picture.

Optionally, the user operation may alternatively be a remote operation. For example, a gesture sensing sensor is installed in the electronic device, and the gesture sensing sensor may detect a remote operation of the user. The remote operation may be a startup or exit operation for an application. The electronic device may determine the start event and the end event of the remote operation by using the gesture sensing sensor, so as to determine the start and the end of the current operation.

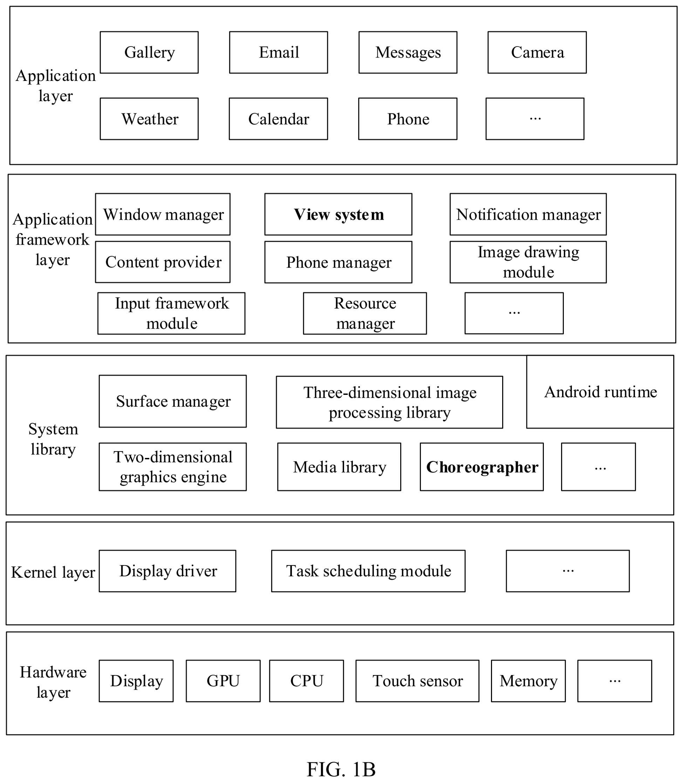

FIG. 1B is a schematic diagram of a software structure of an electronic device according to an embodiment of this application.

As shown in FIG. 1B, a software framework of the electronic device in this application may include an application layer, an application framework layer (framework, FWK), a system library, an Android runtime, a hardware layer, and a kernel layer (kernel).

The application layer may include a series of application packages, for example, application programs such as gallery, email, messages, camera, weather, calendar, and phone (which may also be referred to as applications; some of the foregoing applications are not shown). In the embodiments of this application, the application may be any application at the application layer, and the user may open or close the application, or may perform an operation in the application.

The application framework layer provides an application programming interface (application programming interface, API) and a programming framework for an application at the application layer. The application framework layer includes some predefined functions.

As shown in FIG. 1B, the application framework layer may include a window manager, a view system, a resource manager, a notification manager, a content provider, a phone manager, an input framework module, an image drawing mode, and the like.

The window manager is configured to manage a window program. The window manager may obtain a size of a display screen, determine whether a status bar exists, lock a screen, take a screenshot, and the like.

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may alternatively be a notification that appears in a top status bar of a system in a form of a graph or scroll bar text, for example, a notification of an application running in the background, or a notification that appears on a screen in a form of a dialog window. For example, text information is prompted in the status bar, an alert sound is made, the electronic device vibrates, or an indicator light blinks.

The view system includes visual controls such as a text display control and a picture display control. The view system may be configured to construct an application. A display interface may include one or more views. For example, a display interface including an SMS message notification icon may include a view for displaying a text and a view for displaying a picture.

The input framework module may obtain a user operation reported by the touch sensor, the gesture sensing sensor, or the like, and report the user operation to an application. For example, the touch sensor may detect a touch event. The touch event may include a hands-on event (a start event) and a raise hand event (an end event). The touch sensor reports the touch event to the input framework module, and then the input framework module may continue to report the touch event to the application and the view system.

The start event is an event that indicates a start of a specific user operation, and the end event is an event that indicates an end of the current user operation. The start event and the end event may be touch events, or may be remote events. When the start event and the end event are touch events, the start event is an event from not touching the display by the user to receiving a user operation by the electronic device, and the end event is an event from originally touching the display by the user to leaving the display by the user, that is, failing to detect the current operation by the electronic device.

A main thread of the application may be responsible for processing animation drawing and display. After receiving the end event, the application may perform animation setting, and schedule the view system to perform animation drawing, so as to facilitate subsequent display of an animation picture.

The content provider is configured to store and obtain data, and enable the data to be accessible to an application. The data may include a video, an image, audio, calls that are made and answered, a browsing history and bookmarks, a phone book, and the like.

The phone manager is configured to provide the electronic device 100 with a communication function, for example, call status management (including answering, hanging up, and the like).

The image drawing module may draw a window layer in an animation image.

The Android runtime includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional image processing library (for example, OpenGL ES), a 2D graphics engine (for example, an SGL), and a choreographer.

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video coding formats, for example, MPEG4, H.264, MP3, AAC, AMR, JPG, and PNG.

The three-dimensional image processing library is configured to implement three-dimensional graphics drawing, image rendering, compositing, layer processing, and the like.

The 2D graphics engine is a drawing engine for 2D drawing.

The choreographer (choreographer) may receive an animation processing instruction from the view system, and invoke modules such as the surface manager, the three-dimensional image processing library, and the 2D graphics engine to perform animation rendering and compositing, to obtain a plurality of frames of animation images.

Choreographer and its animation processing process: The choreographer is a class in the operating system, and is used to request a vertical synchronization signal (vsync), and start to perform a drawing operation in response to the vertical synchronization signal that is obtained through the request. The class is a data structure and may be used to define a state and behavior of an object. The vertical synchronization signal is provided by the operating system, and is used to coordinate and synchronize a signal operated by the choreographer and a signal operated by the surfaceFlinger.

After the application is started, the choreographer is initialized. A process of initializing the choreographer includes: An activity generates an instantiated choreographer object based on the choreographer class. This choreographer may perform a drawing operation. The drawing operation may include: The choreographer processes an input event task, an animation event task, a layout event task, a submission event task, and the like. After performing the drawing operation, the choreographer may submit a result of the drawing operation to another module of the application, and then display a refreshed interface or view on the screen of the electronic device.

Generation of the choreographer and a trigger condition for performing a drawing operation: After each application is started by the user, a visual interface or view needs to be displayed for this application, and at least one choreographer belonging to the application is generated. A quantity of choreographers may be a quantity of choreographers of the thread used by the application. A UI thread may be a main thread, and is mainly used to carry computing overheads implemented by functions such as interface display, update, and control interaction.

When the application needs to refresh an interface or a view, the choreographer requests a vertical synchronization signal in a system period from a composer (SurfaceFlinger), so as to seek a suitable occasion for performing a drawing operation. After receiving the vertical synchronization signal sent by the SurfaceFlinger, the choreographer starts to perform the drawing operation. The SurfaceFlinger is a service provided by a bottom layer of the operating system, and is used to receive a request of a choreographer of different applications, and distribute a vertical synchronization signal to the applications in response to the request. The vertical synchronization signal in the system period may be generated through simulation by software, or may be generated by hardware of the electronic device. This is not specifically limited.

A system period frequency of the electronic device is associated with a screen refresh rate of the electronic device. For example, the vertical synchronization signal in the system period and the screen refresh rate are both 90 Hz. A frequency of the vertical synchronization signal in the system period is not limited in this embodiment of this application.

The kernel layer is a foundation of the Android operating system, and a final function of the Android operating system is implemented by using the kernel layer. The kernel layer includes at least a display driver, and the like. The display driver may obtain, from a buffer buffer, completed image frames that are subject to rendering and compositing, and control the display to sequentially display the image frames.

The kernel layer further includes a task scheduling module. The task scheduling module may receive a task instruction from the application layer or the FWK layer. The task instruction may be used to add a task, clear a task, or the like. The task scheduling module may receive a task instruction, and schedule a task list based on a time sequence of the task instruction and a task type. The task list is maintained by the task scheduling module, and the kernel of the electronic device needs to process tasks in the task list. The electronic device processes the tasks in the task list based on a time and a priority of each task. In this embodiment of this application, the task scheduling module may adjust priorities of the tasks in the task list, so as to adjust an execution sequence of the tasks. In this embodiment of this application, if the task list includes an animation drawing task, the electronic device may increase a priority of such a task to a highest priority. The choreographer may preferentially process a task with a high priority in the task list, so that animation drawing can be preferentially processed.

The hardware layer may include a display, a graphics processing unit (graphics processing unit, GPU), a touch sensor, a memory, and the like. The touch sensor can detect a start (a start event) and an end (an end event) of a touch operation of the user, and a start position and an end position of the touch operation. The display may display a completed image frame that is subject to animation processing. The graphics processing unit may perform a process of image rendering and compositing. The central processing unit (CPU) may draw an image.

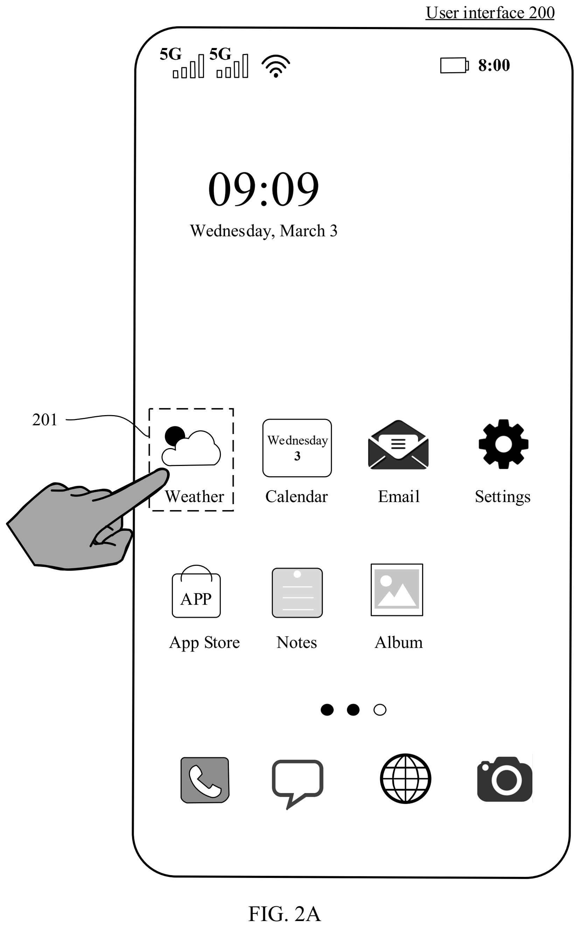

Specifically, a software procedure of the electronic device may be described with reference to FIG. 2A~FIG. 2E.

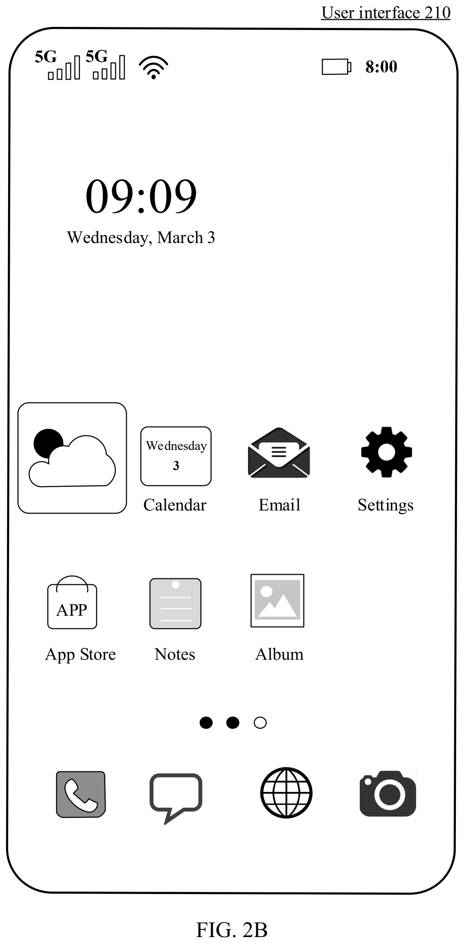

The user taps a weather control 201. Referring to FIG. 2A, the electronic device sequentially displays user interfaces (an animation display process) in FIG. 2B~FIG. 2E in response to the received user operation, until a weather application is opened. When the finger of the user falls onto the screen, the touch sensor may detect that the finger of the user falls, and may send a start event to the input framework module.

It should be noted that the schematic diagram of the software structure of the electronic device shown in FIG. 1B provided in this application is merely an example, and does not limit specific module division in different layers of the Android operating system. For details, refer to the description of the software structure of the Android operating system in conventional technologies. In addition, the shooting method provided in this application may alternatively be implemented based on another operating system, and examples are not provided in this application one by one.

With interaction between the user and the interface of the electronic device, the electronic device may display an animation. An animation display process may include displaying processes in the user interface, for example, opening an application (for example, enlarging an icon), closing an application (for example, shrinking an icon to the home screen), displaying an animation in the application, and exiting the application and entering a multi-task card. The animation display is accompanied by a change of a shape, a size, an angle, a color, and the like of a pattern in the user interface. A specific display manner of the animation is not limited in this embodiment of this application.

FIG. 2A~FIG. 2E are schematic diagrams of a group of user interfaces disclosed by way of example in an embodiment of this application. FIG. 2B to FIG. 2E show animation pictures from starting a weather application to completing startup of the weather application.

FIG. 2A shows an example of a schematic diagram of a user interface of an electronic device. The user powers on the electronic device of the user, so that a display screen of the electronic device displays a home screen of the electronic device, that is, a user interface 200. As shown in FIG. 2A, the user interface 200 may include an icon of at least one application (for example, weather control 201, calendar, email, settings, application store, notes, album, phone, messages, browser, and camera). Positions of the icon of the application and the name of the corresponding application may be adjusted based on a preference of the user. This is not limited in this application.

It should be noted that the schematic diagram of the interface of the electronic device shown in FIG. 2A is example display of this embodiment of this application, and the schematic diagram of the interface of the electronic device may alternatively be another style. This is not limited in this application.

In FIG. 2A, the user may tap the weather control 201 in the user interface 200. In response to a user operation of tapping the weather control 201, an animation of opening the weather application may be displayed, that is, FIG. 2B~FIG. 2E are sequentially displayed. FIG. 2B~FIG. 2E show is an animation change process of opening the weather application.

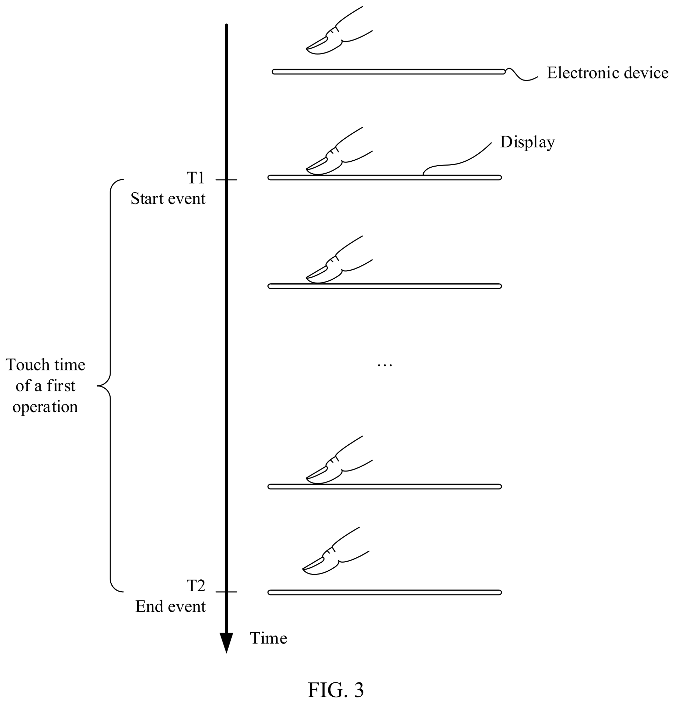

Specifically, FIG. 3 is a schematic diagram of a user operation process disclosed by way of example in an embodiment of this application. FIG. 3 shows a process from a moment at which a finger of the user does not touch the display of the electronic device to a moment at which the finger of the user touches the display and stays for a period of time and then leaves. The electronic device may collect a touch status of the user by using the touch sensor. Before a moment T1, the finger of the user does not touch the display of the electronic device, and the electronic device does not collect a touch position of the user. At the moment T1, the finger of the user touches the display, and the electronic device collects a touch operation of the user and detects a first operation, that is, obtains a start event. For a specific touch position of the user, refer to the touch operation of the user in FIG. 2A as an example. Details are not described again. In a time period between the moment T1 and a moment T2, which is a touch time period of the first operation, the electronic device collects, for a plurality of consecutive times, the user's touch on the display. At the moment T2, the finger of the user leaves the display, and the electronic device fails to collect the first operation of the user, and obtains an end event. The user touches the display screen of the electronic device, and there is a touch time period from the finger touching the display to the finger leaving the display. The time period from the electronic device detecting the touch operation of the user to failing to detect the touch operation may be considered as a touch time period. The first operation is an operation such as tapping or sliding performed by the user once. The operation from the user touching the display to leaving the display is considered as one touch operation.

It should be noted that the user operation in FIG. 2A and FIG. 3 is a touch operation, and the touch operation in this application may alternatively be a remote operation, or the like, which is not limited.

In response to the foregoing user operation, the electronic device may display an animation picture of starting the weather application. The following describes an animation display process in detail.

As shown in FIG. 2B, in the user interface 210, a pattern of a weather icon is larger than that of the weather icon in FIG. 2A.

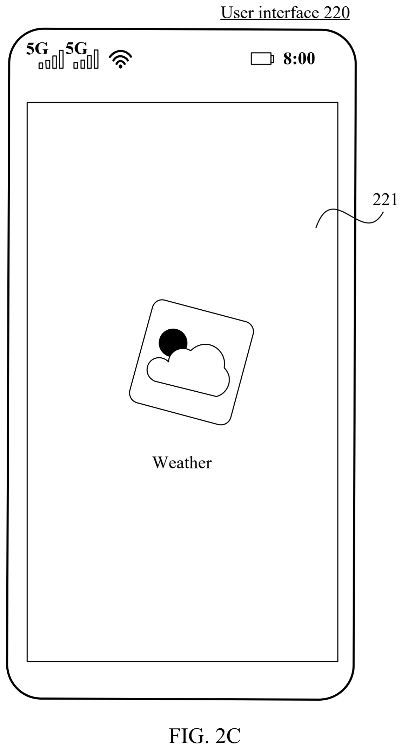

As shown in FIG. 2C, in the user interface 220, the electronic device displays a window 221. Compared with FIG. 2B, the weather icon moves to a center of the window 221, and the weather icon continues to become larger and rotate.

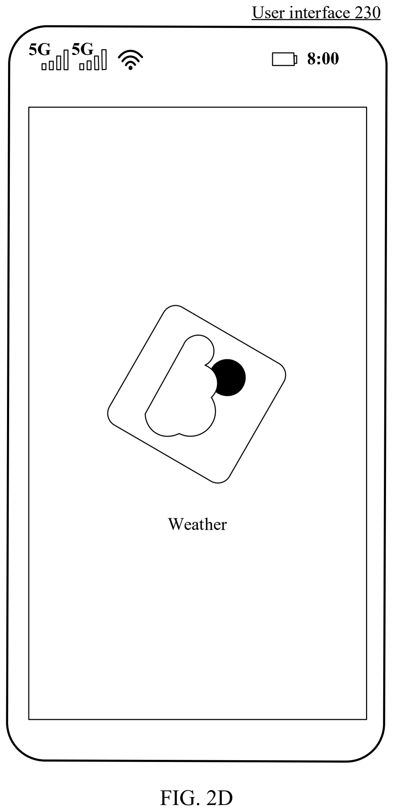

As shown in FIG. 2D, in the user interface 230, compared with FIG. 2C, the weather icon continues to become larger and continues to rotate.

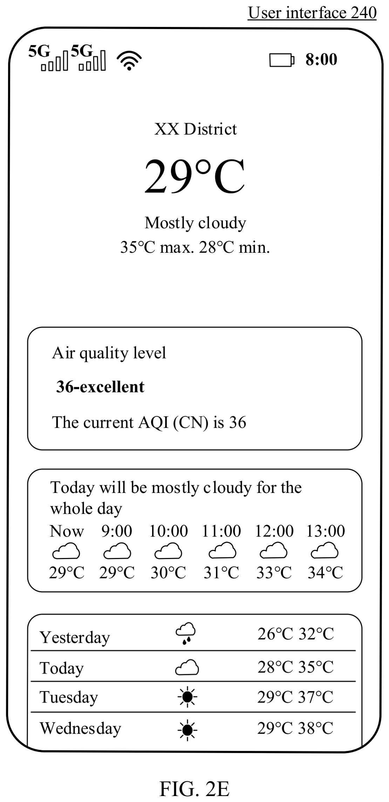

As shown in FIG. 2E, the user interface 240 displays an interface of the weather application. The interface of the weather application may include a current area, a current temperature, a weather condition, air quality, weather conditions in the next few hours, and weather conditions in the last few days.

In the foregoing process in which the user taps the weather application (the application), and the electronic device starts the animation display of the weather application, after detecting that the operation of tapping the weather application ends, the electronic device may start to display an animation. In the animation process, the weather icon gradually becomes larger, and a center of the icon moves to a central position of the interface. While continuing to become larger, the icon rotates until the interface of the weather application is displayed.

The foregoing user operation may be a start operation of the weather application, or may be a close operation of the weather application. In response to the close operation of the weather application, the electronic device may display an animation picture from closing the weather application to completing the closing of the weather application. For example, animation display pictures of closing the weather application are successively the display processes of FIG. 2E, FIG. 2D, FIG. 2C, FIG. 2B, and FIG. 2A.

The foregoing operation in which the animation changes may be a tap operation, may be a slide operation, or may be another type of operation. For example, an operation manner may alternatively be a user gesture, a voice, or the like. This is not limited in this application. In addition, the foregoing process of animation changes in FIG. 2A~FIG. 2E is also merely an example for description. The application may be the weather application or may be another application. This is not limited in this application, either.

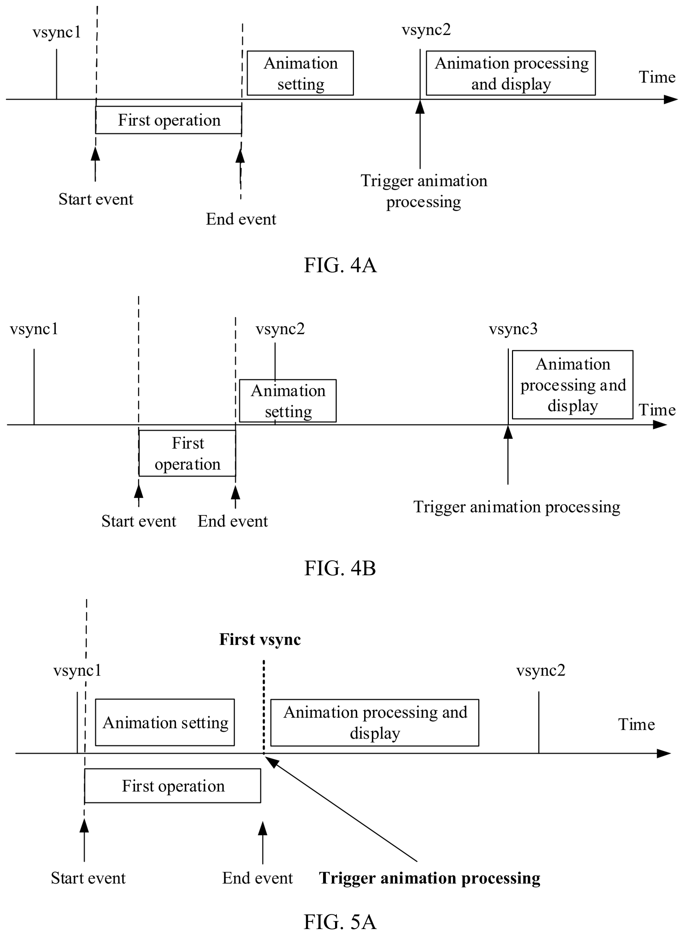

FIG. 4A and FIG. 4B are sequence diagrams of a group of interface processing methods.

As shown in FIG. 4A, the electronic device provides a vertical synchronization signal of a specific frequency (a vertical synchronization signal in a system period). As the time goes by, FIG. 4A shows vertical synchronization signals vsync1 and vsync2 in the system period for two consecutive times.

At a specific moment between the vertical synchronization signals vsync1 and vsync2 in the system period, the electronic device starts to detect a first operation and obtains a start event. Then, the electronic device fails to detect the first operation, which means that the first operation ends and the electronic device obtains an end event. The first operation is an operation performed by the user on an application in the electronic device. In response to the first operation, the electronic device needs to draw and obtain an animation picture of the application, and display the animation picture.

When the electronic device obtains the end event, the electronic device starts to perform dynamic setting, and prepares for subsequent animation processing and display. After performing the dynamic setting, the electronic device waits for the vertical synchronization signal in the system period to trigger animation processing and display in the interface. In other words, after obtaining the vsync2, the electronic device starts to perform animation processing and display.

Generally, after the dynamic setting is performed, a vertical synchronization signal can be obtained only after a period of time, so as to trigger animation processing and display. As shown in FIG. 4B, if the electronic device exactly obtains the vsync2 during the animation setting, and the vsync2 is missed after the processing of the animation setting is completed, the electronic device needs to wait for obtaining the vsync3. In this process, a time interval between the animation setting and the triggering of animation processing is nearly one system period, which is longer than the time interval of waiting in FIG. 4A.

When the user taps to trigger an application, the interface of the electronic device needs to perform processing and display extremely quickly, so that the user does not perceive that a switching speed of the user interface is low, or a response to animation display is slow. In the image drawing processes of FIG. 4A and FIG. 4B, a time of a user operation is random, but the process in which the electronic device processes an animation and displays an interface is performed based on a rhythm of the vertical synchronization signal in the system period. Consequently, within a period of time between the user operation and the animation processing, the electronic device does not execute a task in an interface display process, but waits for a vertical synchronization signal in the system period. In a scenario in which the electronic device performs animation display for a user operation, the electronic device needs to quickly react in a very short time. The foregoing waiting time leads to slow response processing of the electronic device, freezing of a display interface, or the like, resulting in poor user interaction experience.

To resolve the foregoing problems, embodiments of this application provide an interface processing method and an electronic device. When detecting a start event of a first operation, the electronic device starts an operation of animation setting. When the animation setting is completed and an end event of the first operation is detected, a vertical synchronization signal is actively generated. The vertical synchronization signal can trigger animation processing and display in advance. In this way, the electronic device may accelerate an animation processing response process of a touch operation, thereby shortening a display delay, increasing a response speed, reducing a freezing status, and also improving user interaction experience.

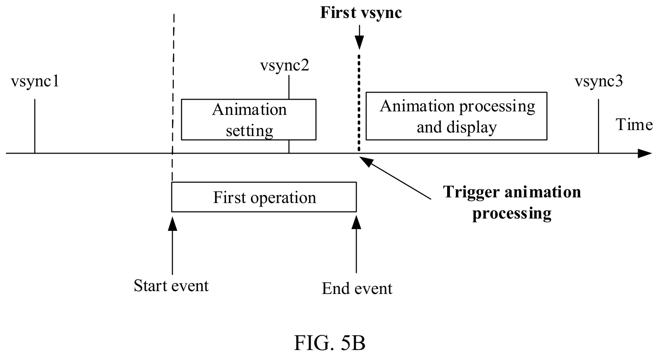

FIG. 5A and FIG. 5B are sequence diagrams of another group of interface processing methods disclosed in an embodiment of this application. As shown in FIG. 5A, the electronic device can periodically obtain vertical synchronization signals of vsync1, vsync2, and the like in a system period. After detecting a start event (a first operation starts), the electronic device may start to perform animation setting. When the animation setting (the first vsync is a first vertical synchronization signal) is completed and an end event (the first operation ends) is detected, the electronic device may immediately generate a pseudo-vertical synchronization signal, and trigger a process of performing animation processing and display.

In this embodiment of this application, a time of the user operation (or duration from the operation to animation display) may occur in one system period, or may occur in two or more system periods. As shown in FIG. 5A, in the system period from vsync1 to vsync2, the electronic device detects the first operation, and performs animation setting based on the start event of the first operation. After the end event of the first operation is detected, and the animation setting ends, animation processing and display are triggered based on the first vsync. In FIG. 5B, in the system period from vsync1 to vsync2, the electronic device detects the start event of the first operation, and starts to perform animation setting. In another system period from vsync2 to vsync3, the electronic device detects the end event of the first operation, and likewise performs animation processing and display based on the foregoing condition. In FIG. 5B, the first operation and the animation setting may be performed across system periods. This is not limited in this application.

Compared with the execution process in FIG. 4A, in the execution process in FIG. 5A and FIG. 5B, on the one hand, a trigger condition for the execution process of animation setting is advanced in time. Generally, in a touch process of the user, the electronic device has started to perform animation setting, preparing for animation processing and display in advance. On the other hand, when the animation setting ends and the start event is detected, a first vsync is actively generated. The first vsync may directly trigger animation processing and display, without a need to wait for the periodic vsync2 shown in FIG. 4A to perform animation drawing and display. Therefore, in this embodiment of this application, in the animation display process, an occasion for triggering animation setting and animation processing and display is adjusted, an interface processing and display process is accelerated, an animation response speed is increased, a problem of slow response to an animation picture is resolved, and user interaction experience is ensured.

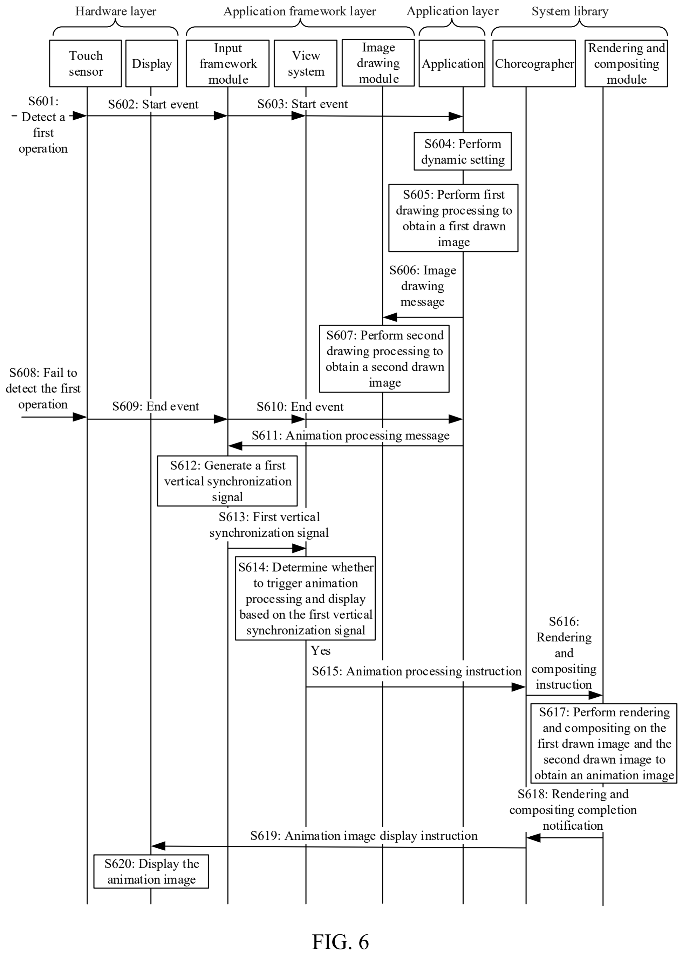

FIG. 6 is a schematic flowchart of an interface processing method disclosed in an embodiment of this application.

The method in FIG. 6 is described below in detail with reference to FIG. 2A~FIG. 2E, FIG. 3, FIG. 5A, and FIG. 5B. The interface processing method may include but is not limited to the following steps:
S601: A touch sensor detects a first operation.

At a moment T1, an electronic device detects a first operation from a failure to detect a touch operation, and the touch sensor may determine that a start event is obtained. The first operation may be a touch operation on an application. In response to the first operation, the electronic device needs to display an animation picture related to the application. For a tapping process of the user, refer to the touch change before and after the moment T1 in FIG. 3 and the touch operation in FIG. 2A. Details are not described again.

S602: The touch sensor sends a start event to an input framework module.

When detecting the first operation, the touch sensor may send a start event to the input framework module. Correspondingly, the input framework module may receive the start event from the touch sensor. The touch sensor sends a touch event to the input framework module. The touch event may include a start event (for example, an event that starts a touch in FIG. 3) and an end event (for example, an event that ends a touch in FIG. 3) that are of a specific operation.

S603: The input framework module sends the start event to the application by using a view system.

The input framework module may send the start event to the application by using the view system. Correspondingly, the application may receive, by using the view system, the start event from the input framework module.

Optionally, after receiving the start event from the input framework module, the view system may determine a start time. Specifically, after receiving the start event, the view system immediately records a current time point as the start time.

It should be noted that, when the application receives the start event, drawing of a layer image may be started, and the application may schedule an image drawing module at the FWK layer to perform drawing of a window layer. The image drawing module is located at the FWK layer of the electronic device.

S604: The application performs dynamic setting.

When obtaining the start event of the first operation, the application starts to perform dynamic setting, that is, sets an animation attribute of the first application for the first operation.

Specifically, dynamic setting is performed, and the application sets the animation attribute. The animation attribute may include at least one of attribute parameters such as an animation type, animation content, an animation size, animation duration, or an animation start position and an animation end position. The animation type may include one of starting an application, sliding an intermediate interface, and exiting an application, that is, determining an animation type corresponding to the first operation. The animation start position is used to indicate a position of a first frame of picture in M frames of pictures on a display, and the animation end position is used to indicate a position of a last frame of picture in the M frames of pictures on the display.

S605: The application performs first drawing processing to obtain a first drawn image.

When obtaining the start event, the application may start to draw an image. For example, the camera application processes an image collected by the camera to obtain the first drawn image.

S606: The application sends an image drawing message to the image drawing module.

When obtaining the start event, the application may send an image drawing message to the image drawing module. Correspondingly, the image drawing module may receive the image drawing message from the application.

S607: The image drawing module performs second drawing processing to obtain a second drawn image.

After receiving the image drawing message, the image drawing module may perform second drawing processing to obtain the second drawn image. The second drawing processing may be drawing of a window. For example, the image drawing module draws a window interface of the camera application, that is, obtains the second drawn image.

S608: The touch sensor fails to detect the first operation.

At a moment T2, the touch sensor of the electronic device fails to detect the first operation, indicating that the user ends the current touch operation, and the finger leaves the user interface. The touch sensor may determine that an end event is obtained. For details, refer to the touch change before and after the moment T2 in FIG. 6.

S609: The touch sensor sends an end event to the input framework module.

When failing to detect the first operation, the touch sensor may send an end event to the input framework module. Correspondingly, the input framework module may receive the end event from the touch sensor.

S610: The input framework module sends the end event to the application by using the view system.

When receiving the end event, the input framework module may send the end event to the application by using the view system. Correspondingly, the application may receive, by using the view system, the end event from the input framework module.

Optionally, when the end event is obtained, the end time may be determined. Specifically, after receiving the end event, the view system immediately records a current time point as the end time.

S611: The application sends an animation processing message to the input framework module.

When the application determines that performing of the dynamic setting (S604) is completed and the end event is obtained (S610), the application may send an animation processing message to the input framework module. Correspondingly, the input framework module may receive the animation processing message from the application. The animation processing message may indicate the input framework module to generate a first vertical synchronization signal.

S612: The input framework module generates the first vertical synchronization signal.

When receiving the animation processing message, the input framework module may generate the first vertical synchronization signal. The first vertical synchronization signal includes a timestamp.

In this embodiment of this application, the first vertical synchronization signal may be a pseudo-vertical synchronization signal. The information about the first vertical synchronization signal may include the timestamp of the first vertical synchronization signal. After S604 and S610 are performed, the application immediately generates a pseudo-vertical synchronization signal. The first vertical synchronization signal may trigger the input framework module to perform S611 and S612, that is, trigger a procedure for determining whether to perform animation processing based on the first vertical synchronization signal. The procedure for determining whether to perform animation processing based on the first vertical synchronization signal may include S614. The pseudo-vertical synchronization signal is a vertical synchronization signal generated by the application. On the contrary, a true vertical synchronization signal (a vertical synchronization signal in the system period) may be a vertical synchronization signal received by a choreographer at specific frequency, for example, the foregoing vsync received by the choreographer from the SurfaceFlinger.

S613: The input framework module sends the first vertical synchronization signal to the view system.

After generating the first vertical synchronization signal, the input framework module may send the first vertical synchronization signal to the view system. Correspondingly, the view system may receive the first vertical synchronization signal from the input framework module.

S614: The view system determines whether to trigger animation processing and display based on the first vertical synchronization signal.

When receiving the first vertical synchronization signal, the view system may determine the first vertical synchronization signal and a timestamp thereof. The view system needs to first determine whether the first vertical synchronization signal triggers animation processing and display in advance. Specifically, the view system determines whether a time difference between the first vertical synchronization signal and a vertical synchronization signal in a nearest system period meets animation processing duration.

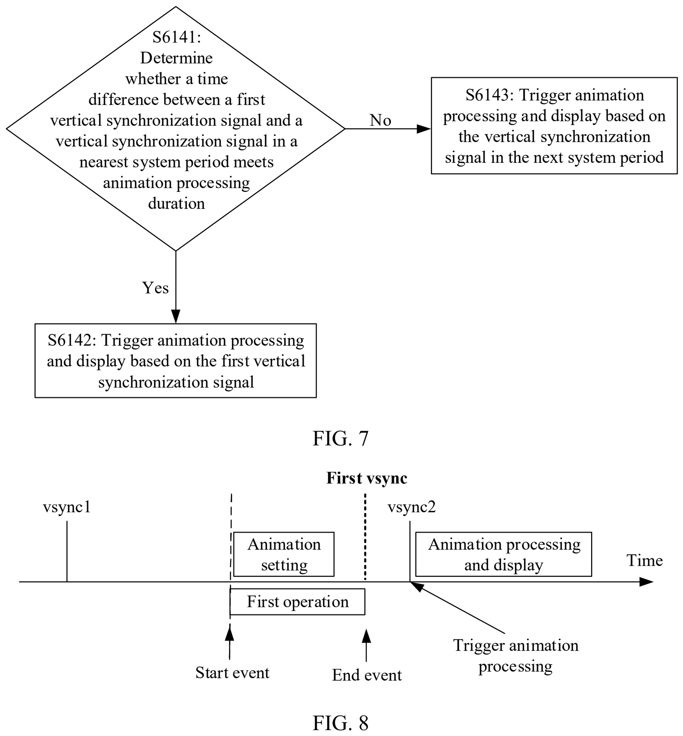

FIG. 7 is a schematic flowchart of a method for determining whether to trigger animation processing and display based on a first vertical synchronization signal disclosed by way of example in an embodiment of this application. As shown in FIG. 7, the method for determining whether to trigger animation processing and display based on a first vertical synchronization signal may include but is not limited to the following steps:

S6141: The view system determines whether the time difference between the first vertical synchronization signal and the vertical synchronization signal in the nearest system period meets the animation processing duration (an animation trigger condition). When the animation processing duration is met, S6142 is performed (S615 is performed). When the animation processing duration is not met, S6143 is performed (S615 is not performed).

The vertical synchronization signal in the nearest system period may be a vertical synchronization signal in a next system period (the animation processing duration is first threshold duration) of the first vertical synchronization signal, or may be a vertical synchronization signal in a previous system period (the animation processing duration is second threshold duration) of the first vertical synchronization signal. Each animation processing duration is a set value, which is not described in detail in the following two implementations.

Implementation 1: The view system determines whether a first time difference between the first vertical synchronization signal and the vertical synchronization signal in the next system period is greater than (greater than or equal to) the first threshold duration. When the first time difference is greater than (greater than or equal to) the first threshold duration, the animation processing duration is met. When the first time difference is less than or equal to (less than) the first threshold duration, the animation processing duration is not met.

In a process of obtaining the first vertical synchronization signal, the electronic device periodically obtains the vertical synchronization signal in the system period. A time of the first vertical synchronization signal is between vertical synchronization signals in two system periods. The vertical synchronization signal in the next system period is later than the first vertical synchronization signal. The vertical synchronization signal in the next system period is a vertical synchronization signal in a system period nearest to the first vertical synchronization signal. The view system may calculate a first time difference between the vertical synchronization signal in the next system period and the first vertical synchronization signal, compare the first time difference with the first threshold duration, and determine, based on a comparison result, whether the animation processing duration is met. The first threshold duration may be duration preset by the electronic device. Meeting the first threshold duration means that the electronic device has sufficient time to perform animation processing and display.

For example, the first threshold duration is 5 ms. When the first time difference is 3 ms, because of 5<3, it is determined that the animation processing duration is not met. When the first time difference is 10 ms, because of 10>5, it is determined that the animation processing duration is met.

Implementation 2: The view system determines whether a second time difference between the first vertical synchronization signal and the vertical synchronization signal in the previous system period meets the second threshold duration. When the second time difference is less than (less than or equal to) the second threshold duration, the animation processing duration is met. When the second time difference is greater than or equal to (greater than) the second threshold duration, the animation processing duration is not met, and a vertical synchronization signal in a next system period is awaited to trigger animation processing and display. When a sum of the second threshold duration and the first threshold duration is equal to duration of one system period, the vertical synchronization signal in the previous system period is a vertical synchronization signal in a nearest system period before the first vertical synchronization signal.

S6142: The view system triggers animation processing and display based on the first vertical synchronization signal.

When the animation processing duration is met, the electronic device may perform S615. The choreographer is triggered by the first vertical synchronization signal delivered by the view system, to perform animation processing and display.

For a process in which the view system triggers animation processing and display based on the first vertical synchronization signal, refer to the descriptions of S615~S620. Details are not described again.

S6143: The view system triggers animation processing and display based on the vertical synchronization signal in the next system period.

A trigger condition for S616 is that the choreographer may wait for the vertical synchronization signal in the next system period, and when obtaining the vertical synchronization signal in the next system period, perform the process of triggering animation processing and display. When the animation processing duration is not met, the view system does not perform S615, and the choreographer needs to wait for the vertical synchronization signal in the next system period delivered by the surfaceFlinger, so as to trigger animation processing and display. For specific descriptions of animation processing and display, refer to related descriptions of S616~S620. In addition, for a case of S6143, refer to related descriptions of FIG. 8. Details are not described again.

Optionally, when the electronic device is provided with the foregoing animation pre-response function, the electronic device may perform S614~S620. The electronic device has an animation pre-response switch, and when the foregoing animation pre-response function is provided, the foregoing switch is turned on. When animation pre-response is not provided, the foregoing function is disabled. When the animation pre-response switch is in an on state, the electronic device may perform S614~S620. When the animation pre-response switch is in an off state, the electronic device triggers animation processing and display based on the vertical synchronization signal in the next system period (refer to S6143 and perform S616~S620).

S615: The view system sends an animation processing instruction to the choreographer.

The view system may send the animation processing instruction to the choreographer. Correspondingly, the choreographer may receive the animation processing instruction from the view system. The animation processing instruction is used to instruct to start image rendering and compositing for the first operation.

The animation processing instruction may include the foregoing first vertical synchronization signal. The first vertical synchronization signal may trigger the choreographer to perform image processing and compositing.

**In** this embodiment of this application, the vertical synchronization signal may be used to trigger rendering of one or more layers, and trigger layer compositing on the one or more images.

S616: The choreographer sends a rendering and compositing instruction to a rendering and compositing module.

After receiving the animation processing instruction, the choreographer may send the rendering and compositing instruction to the rendering and compositing module. Correspondingly, the rendering and compositing module may receive the rendering and compositing instruction from the choreographer.

S617: The rendering and compositing module performs rendering and compositing on the first drawn image and the second drawn image to obtain an animation image.

After receiving the rendering and compositing instruction, the rendering and compositing module may perform rendering and compositing on the first drawn image and the second drawn image to obtain N frames of animation images. Specifically, the rendering and compositing module may be a module such as a system library including a media library, a two-dimensional image engine, a surface manager, and a three-dimensional image processing library. The rendering and compositing module may perform rendering (actual processing hardware may be a GPU) on the image drawn by the application, and perform compositing (which may be specifically performed by the surfaceFlinger) on the layer that is subject to drawing and rendering, to obtain the animation image. After the animation image is obtained, the animation image may be buffered in a display buffer (buffer), waiting for display.

S618: The rendering and compositing module sends a rendering and compositing completion notification to the choreographer.

After obtaining the animation image, the rendering and compositing module may send the rendering and compositing completion notification to the choreographer. Correspondingly, the choreographer may receive the rendering and compositing completion notification from the rendering and compositing module.

S619: The choreographer sends an animation image display instruction to the display.

After obtaining the animation image, the choreographer may send the animation image display instruction to the display. Correspondingly, a display driver may receive the animation image display instruction from the choreographer.

S620: The display displays the animation image.

After obtaining the animation image display instruction, the display may obtain the animation image from the display buffer, and display the animation image in the buffer.

For a display process of the electronic device, refer to the process of FIG. 2A~FIG. 2E. Details are not described.

FIG. 8 is a sequence diagram of an interface processing method disclosed in an embodiment of this application. As shown in FIG. 8, when the electronic device performs S6141, and when the animation setting ends and a start event is detected, the electronic device starts to determine whether a first time difference between the first vertical synchronization signal (first vsync) and the vertical synchronization signal in the next system period (vsync2) meets first threshold duration. In FIG. 8, the first time difference is excessively small, and is determined not to meet the first threshold duration. Animation drawing and display are performed only after the vsync2 arrives. In the foregoing process, because the time difference between the first vsync and the vsync2 is excessively small, the electronic device does not have sufficient time to complete the period of animation drawing and display. Therefore, the electronic device may wait for the vsync2 to trigger animation drawing and display. In terms of time, no long delay occurs, and it is not necessary to perform processing by using the first vertical synchronization signal in advance. This can ensure that the process of interface processing and display is completed in one vsync signal period.

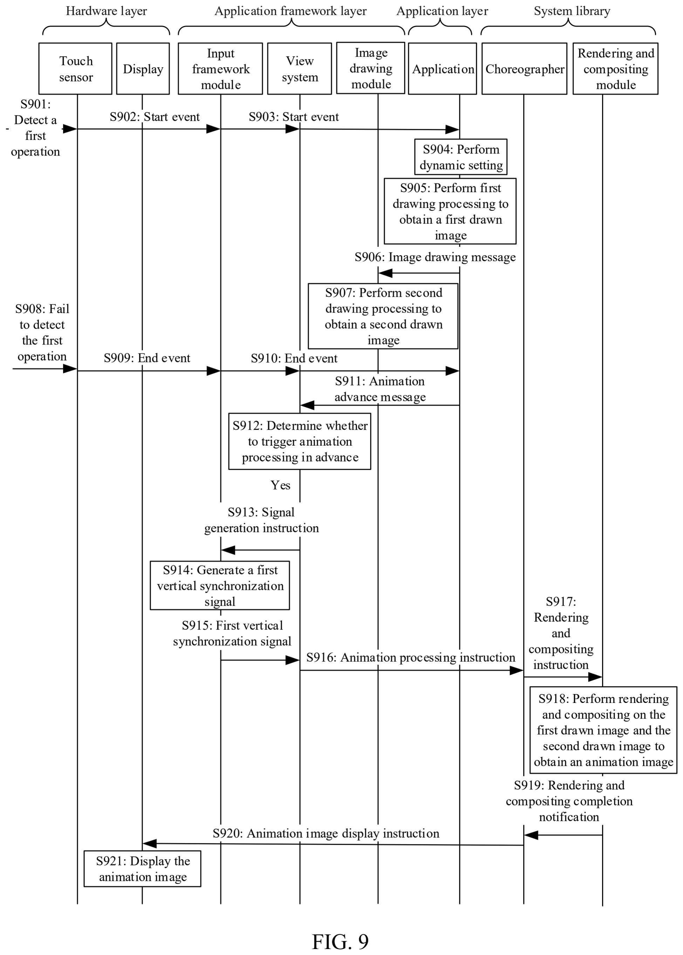

FIG. 9 is a schematic flowchart of another interface processing method disclosed in an embodiment of this application.

The method in FIG. 9 is described below in detail with reference to FIG. 2A~FIG. 2E, FIG. 3, FIG. 5A, and FIG. 5B. The interface processing method may include but is not limited to the following steps:
S901: A touch sensor detects a first operation.

S902: The touch sensor sends a start event to an input framework module.

S903: The input framework module sends the start event to the application by using a view system.

S904: The application performs dynamic setting.

S905: The application performs first drawing processing to obtain a first drawn image.

S906: The application sends an image drawing message to the image drawing module.

S907: The image drawing module performs second drawing processing to obtain a second drawn image.

S908: The touch sensor fails to detect the first operation.

S909: The touch sensor sends an end event to the input framework module.

S910: The input framework module sends the end event to the application by using the view system.

For specific descriptions of S901~S910, refer to related descriptions of S601~S910. Details are not described.

S911: The application sends an animation advance message to the view system.

When determining that the end event of the first operation is obtained (S910) and the dynamic setting is completed (S904), the application may send the animation advance message to the view system. Correspondingly, the view system may receive the animation advance message from the application. The animation advance message is used to indicate the view system to determine whether to generate the first vertical synchronization signal.

S912: The view system determines whether to trigger animation processing in advance. When it is determined that animation processing is triggered in advance, S913~S916 are performed. When it is determined that animation processing is not triggered in advance, S913~S916 are not performed.

The view system may determine whether a time difference between the current time and a vertical synchronization signal in a nearest system period meets animation processing duration. When the animation processing duration is met, it is determined to trigger animation processing in advance. When the animation processing duration is not met, it is determined not to trigger animation processing in advance.

Implementation 1: The view system determines whether a first time difference between the current time and the vertical synchronization signal in the next system period is greater than (greater than or equal to) the first threshold duration. When the first time difference is greater than (greater than or equal to) the first threshold duration, the animation processing duration is met, and S913 is performed. When the first time difference is less than or equal to (less than) the first threshold duration, the animation processing duration is not met, and a vertical synchronization signal in a next system period is awaited to trigger animation processing and display.

Implementation 2: The view system determines whether a second time difference between the current time and the vertical synchronization signal in the previous system period meets the second threshold duration. When the second time difference is less than (less than or equal to) the second threshold duration, the animation processing duration is met, and S913 is performed. When the second time difference is greater than or equal to (greater than) the second threshold duration, the animation processing duration is not met, and a vertical synchronization signal in a next system period is awaited to trigger animation processing and display.

It should be noted that for a processing process of S912, refer to the specific processing process of S614. The current time may be considered as a time corresponding to the first vertical synchronization signal, and details are not described.

S913: The view system sends a signal generation instruction to the input framework module.

When the view system determines to trigger animation processing in advance, the view system may send the signal generation instruction to the input framework module. Correspondingly, the input framework module may receive the signal generation instruction from the view system. The signal generation instruction is used to instruct the input framework module to generate a first vertical synchronization signal.

S914: The input framework module generates the first vertical synchronization signal.

When receiving the signal generation instruction, the input framework module may generate the first vertical synchronization signal. For details about S914, refer to S612. Details are not described.

S915: The input framework module sends the first vertical synchronization signal to the view system.

After generating the first vertical synchronization signal, the input framework module may send the first vertical synchronization signal to the view system. For details about S915, refer to the description of S613. Details are not described.

S916: The view system sends an animation processing instruction to the choreographer.

When receiving the first vertical synchronization signal, the view system may send the animation processing instruction to the choreographer. The animation processing instruction may include the first vertical synchronization signal. For details about S916, refer to the description of S613. Details are not described.

In the foregoing processing process of S911~S916, the view system may first determine whether the process of dynamic processing and display is performed in advance, and when it is determined that the process of dynamic processing and display is performed in advance, the input framework module generates the first vertical synchronization signal. However, when the process of dynamic processing and display is not performed in advance, the process of S913~S916 does not need to be performed, thereby simplifying execution steps and logic, reducing unnecessary processing steps, improving execution efficiency of interface processing, and saving processing resources.

S917: The choreographer sends a rendering and compositing instruction to a rendering and compositing module.

S918: The rendering and compositing module performs rendering and compositing on the first drawn image and the second drawn image to obtain an animation image.

S919: The rendering and compositing module sends a rendering and compositing completion notification to the choreographer.

S920: The choreographer sends an animation image display instruction to the display.

S921: The display displays the animation image.

For details about S917~S921, refer to related descriptions of S616~S620. Details are not described.

The electronic device stores a task list, and the task list may store a task. Tasks of different types have different priorities. A higher priority of a task indicates more preferential processing. Task types may include an input event task, an animation processing task, a drawing task, and a submission task. A task scheduling module adjusts a priority of a task in the task list. The choreographer processes tasks in the task list in descending order of priorities and time sequences.

The task scheduling module may increase a priority of the drawing task in the animation drawing instruction in the task list to 1. The choreographer may execute the adjusted task list based on the priority.

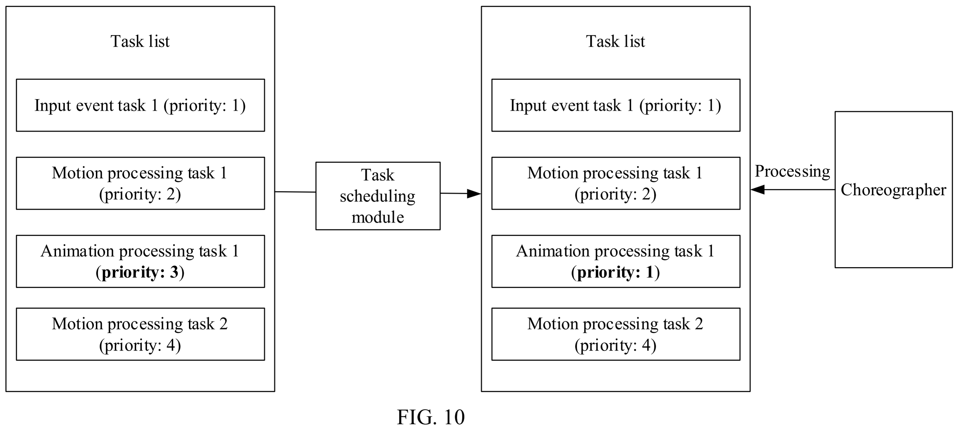

FIG. 10 is a schematic diagram of a task list adjustment and change disclosed by way of example in an embodiment of this application. As shown in FIG. 10, it is assumed that a priority of an input event task is 1, a priority of a motion processing task is 2, a priority of an animation processing task is 3, and a priority of a submission task is 4. A smaller value indicates a higher priority. The current tasks in the task list include an input event task 1 (with a priority of 1), a motion processing task 1 (with a priority of 4), an animation processing task 1 (with a priority of 3), and a motion processing task 2 (with a priority of 4). The drawing task 1 is a drawing task triggered by the first vertical synchronization signal. Therefore, the task scheduling module adjusts the priority of the animation processing task 1 from 3 to 1. The priorities of other tasks remain unchanged. Then, the choreographer may process the tasks based on the values of the priorities and the time sequences of the tasks. In the adjusted task list, the electronic device may execute the tasks in a sequence of the input event task 1, the drawing task 1, the motion processing task 1, and the motion processing task 2. The execution time of the drawing task 1 is advanced. In this way, the electronic device may execute, in advance, the task triggered by the first vertical synchronization signal in a task queue, so as to ensure timeliness of performing drawing and display, increase a response speed, and reduce a freezing status of an animation.

As used in the foregoing embodiments, based on the context, the term "when ..." may be interpreted as a meaning of "if ...", "after ...", "in response to determining ...", or "in response to detecting ...". Similarly, based on the context, the phrase "when determining ..." or "if detecting (a stated condition or event)" may be interpreted as a meaning of "if determining ...", "in response to determining ...", "when detecting (a stated condition or event)", or "in response to detecting ... (a stated condition or event)".

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

## Claims

1. An interface processing method, wherein the method is applied to an electronic device, a first application is installed in the electronic device, and the method comprises:
receiving a first operation of a user on the first application;
performing a first animation setting in response to a start event of the first operation; and
performing animation processing in response to a third vertical synchronization signal, and displaying an animation picture of the first application when the first animation setting is completed and an end event of the first operation is received, wherein the third vertical synchronization signal is located between a first vertical synchronization signal and a second vertical synchronization signal in a first vertical synchronization signal period.

2. The method according to claim 1, wherein the performing animation processing in response to a third vertical synchronization signal comprises:
performing animation processing in response to the third vertical synchronization signal when a first time difference between the third vertical synchronization signal and the second vertical synchronization signal is greater than or equal to first threshold duration, wherein the second vertical synchronization signal is a next vertical synchronization signal in the first vertical synchronization signal period.

3. The method according to claim 1, wherein the performing animation processing in response to a third vertical synchronization signal comprises:
performing animation processing in response to the third vertical synchronization signal when a second time difference between the third vertical synchronization signal and the first vertical synchronization signal is less than or equal to second threshold duration, wherein the first vertical synchronization signal is a previous vertical synchronization signal in the first vertical synchronization signal period.

4. The method according to claim 1, wherein the performing a first animation setting comprises:
setting an animation attribute of the first application for the first operation, wherein the animation attribute comprises at least one of an animation type, animation content, an animation size, animation duration, or an animation start position and an animation end position; the animation type may comprise one of starting an application, sliding an intermediate interface, and exiting an application; the animation start position is used to indicate a position of a first frame of picture in M frames of animation pictures on a display, and the animation end position is used to indicate a position of a last frame of picture in the M frames of animation pictures on the display.

5. The method according to claim 1, wherein the start event is an event from detecting no operation change to detecting the first operation; and the end event is an event from detecting a change of the first operation to detecting no change.

6. The method according to claim 1, wherein the performing animation processing in response to a third vertical synchronization signal when the first animation setting is completed and an end event of the first operation is received comprises:
generating the third vertical synchronization signal and performing animation processing in response to the third vertical synchronization signal when the first animation setting is completed and the end event of the first operation is received.

7. The method according to claim 6, wherein the generating the third vertical synchronization signal comprises:
generating the third vertical synchronization signal when a first time difference between a current time and the second vertical synchronization signal is greater than or equal to first threshold duration, or a second time difference between the current time and the first vertical synchronization signal is less than or equal to second threshold duration, wherein
the second vertical synchronization signal is a next vertical synchronization signal in the first vertical synchronization signal period; and the first vertical synchronization signal is a previous vertical synchronization signal in the first vertical synchronization signal period.

8. The method according to claim 6, wherein the electronic device comprises a view system, a choreographer, and a display; and the performing animation processing in response to a third vertical synchronization signal comprises:
sending the third vertical synchronization signal to the choreographer by using the view system;
performing image processing in response to the third vertical synchronization signal by using the choreographer, and obtaining N frames of animation images, wherein N is an integer greater than 1; and
sequentially displaying the N frames of animation images by using the display.

9. The method according to claim 7, wherein the electronic device further comprises an input framework module; the generating the third vertical synchronization signal when the first animation setting is completed and the end event of the first operation is received comprises:
sending an animation processing message to the input framework module by using the first application when the first animation setting is completed and the end event of the first operation is received; and
generating the third vertical synchronization signal by using the input framework module; and
before the sending the third vertical synchronization signal to the choreographer by using the view system, the performing animation processing in response to the third vertical synchronization signal further comprises:
sending the third vertical synchronization signal to the view system by using the input framework module when a first time difference between the third vertical synchronization signal and the second vertical synchronization signal is greater than or equal to first threshold duration, or a second time difference between the third vertical synchronization signal and the first vertical synchronization signal is less than or equal to second threshold duration.

10. The method according to any one of claims 1-9, wherein the electronic device stores a task list, the task list comprises a first task and a second task, a priority of the first task is X, a priority of the second task is Y, and Y is greater than the priority of X; the method further comprises:
increasing the priority of the first task to Z, wherein Z is greater than the priority of Y; and
the performing animation processing in response to a third vertical synchronization signal comprises:
in response to the third vertical synchronization signal, first performing image processing on the first task corresponding to the priority of Z, and then processing the second task corresponding to the priority of Y.

11. An interface processing method, wherein the method is applied to an electronic device, a second application is installed in the electronic device, and the method comprises:
receiving a second operation of a user on the second application;
performing a second animation setting in response to a start event of the second operation; and
when the second animation setting is completed and an end event of the second operation is received, if a sixth vertical synchronization signal meets an advance trigger condition, performing animation processing in response to the sixth vertical synchronization signal, and displaying an animation picture of the second application, wherein
the advance trigger condition comprises that a first time difference between the sixth vertical synchronization signal and a fifth vertical synchronization signal is greater than or equal to first threshold duration, or a second time difference between the sixth vertical synchronization signal and a fourth vertical synchronization signal is less than or equal to second threshold duration;
the sixth vertical synchronization signal is located between a fourth vertical synchronization signal and a fifth vertical synchronization signal in a second vertical synchronization signal period; the fourth vertical synchronization signal is a previous vertical synchronization signal in the second vertical synchronization signal period, and the fifth vertical synchronization signal is a next vertical synchronization signal in the second vertical synchronization signal period.

12. The method according to claim 11, wherein when the second animation setting is completed and the end event of the second operation is received, the method further comprises:
if the sixth vertical synchronization signal does not meet the advance trigger condition, performing animation processing in response to the fifth vertical synchronization signal, and displaying the animation picture of the second application.

13. An electronic device, comprising: one or more processors and one or more memories, wherein the one or more processors are coupled to the one or more memories, the one or more memories are configured to store computer program code, the computer program code comprises computer instructions, and when the one or more processors execute the computer instructions, the electronic device is enabled to perform the method according to any one of claims 1-10.

14. An electronic device, comprising: one or more processors and one or more memories, wherein the one or more processors are coupled to the one or more memories, the one or more memories are configured to store computer program code, the computer program code comprises computer instructions, and when the one or more processors execute the computer instructions, the electronic device is enabled to perform the method according to any one of claims 11-12.

15. A computer-readable storage medium, wherein the computer-readable storage medium stores a computer program, and when the computer program is executed by a processor, the method according to any one of claims 1-10 is implemented.

16. A computer-readable storage medium, wherein the computer-readable storage medium stores a computer program, and when the computer program is executed by a processor, the method according to any one of claims 11-12 is implemented.
